# EUROPEAN PATENT APPLICATION

(11) **EP 4 394 942 A1**
(43) Date of publication of application: **03.07.2024**
(21) Application number: 22945367.5
(22) Date of filing: 10.06.2022
(51) Int. Cl.: H01M 4/505, H01M 4/525, H01M 4/139

(54) **POSITIVE ELECTRODE MATERIAL, ELECTROCHEMICAL APPARATUS, AND ELECTRONIC APPARATUS**

(71) Applicant: Ningde Amperex Technology Limited, Ningde, Fujian 352100 (CN)
(72) Inventor: CHENG, Shiyang, Ningde, Fujian 352100 (CN); SHITABA, Jumpei, Ningde, Fujian 352100 (CN); LANG, Ye, Ningde, Fujian 352100 (CN); LU, Yuhao, Ningde, Fujian 352100 (CN)
(74) Representative: Icosa
(86) International application number: PCT/CN2022/098278
(87) International publication number: WO 2023/236226

(57) **Abstract**

This application provides a positive electrode material, including a lithium transition metal oxide. As tested by X-ray diffractometry, a full width at half maximum FWHM₍₁₀₁₎ of a (101) crystal plane diffraction peak and a full width at half maximum FWHM₍₁₀₄₎ of a (104) crystal plane diffraction peak of the positive electrode material satisfy: FWHM₍₁₀₁₎/FWHM₍₁₀₄₎ ≤ 0.7. This application further provides an electrochemical device and an electronic device that includes the positive electrode material. The positive electrode material is of excellent structural stability under high temperature and high voltage, and is of excellent kinetic performance under high-rate charging and discharging conditions.

## Description

### TECHNICAL FIELD

This application relates to the field of energy storage, and in particular, to a positive electrode material, an electrochemical device, and an electronic device.

### BACKGROUND

With popularization of consumer electronic products such as notebook computers, mobile phones, tablet computers, mobile power supplies, and unmanned aerial vehicles, requirements on a battery in such products are increasingly higher. For example, the battery not only needs to be lightweight and portable, but also needs to have a high capacity and a long service life. Lithium-ion batteries have occupied a mainstream position in the market by virtue of prominent advantages such as a high energy density, high safety, no memory effect, and a long service life.

To seek a higher energy density, lithium-ion batteries have been developing toward higher voltage and a higher delithiation level. Under high voltage and high delithiation level, the problems of surface oxygen release and structural phase transition of a positive electrode material are exposed notably, thereby causing problems such as plunge of the cycle capacity and gassing of the battery. In addition, inferior kinetics of ternary positive electrode materials also restrict capacity exertion, and are prone to a series of problems such as severe temperature rise of the battery in a case that the battery is charged or discharged at a high rate.

### SUMMARY

In view of the above problems in the prior art, this application provides a positive electrode material and an electrochemical device that includes the positive electrode material, so as to improve structural stability of the positive electrode material under high temperature and high voltage and kinetic performance under high-rate charging and discharging conditions, and in turn, increase a platform capacity of the electrochemical device under a high voltage, reduce the amount of gas generated by the electrochemical device during storage under high temperature and high voltage, reduce a temperature increment under high-rate charging and discharging conditions, and improve overall performance of the electrochemical device.

According to a first aspect, this application provides a positive electrode material, including a lithium transition metal oxide. As tested by X-ray diffractometry, a full width at half maximum FWHM₍₁₀₁₎ of a (101) crystal plane diffraction peak and a full width at half maximum FWHM₍₁₀₄₎ of a (104) crystal plane diffraction peak of the positive electrode material satisfy: FWHM₍₁₀₁₎/FWHM₍₁₀₄₎ ≤ 0.7. The (104) crystal plane represents a most active plane for deintercalating lithium ions, and the (101) crystal plane is usually related to a concentration of oxygen defects. Due to existence of the oxygen defects, regularity of the (104) crystal plane in a superficial layer of the positive electrode material is lower than regularity of the (101) crystal plane. In addition, with the increase of the concentration of oxygen defects, the intensity of the (101) crystal plane of the positive electrode material is increasingly higher. The regularity of the (101) crystal plane increases first and then decreases, and the regularity of the (104) crystal plane also increases first and then decreases. That is, both FWHM₍₁₀₁₎ and FWHM₍₁₀₄₎ decrease first and then increase with the increase of the concentration of the oxygen defects. The existence of oxygen defects reduces activity of oxygen on the surface of the material, stabilizes oxygen ions in an outer layer of the material, and suppresses oxygen release and gassing of the material during high-temperature cycling. In addition, the high concentration of oxygen defects activates redox properties of the transition metal, and greatly increases the energy density of the material. This application controls the FWHM₍₁₀₁₎/FWHM₍₁₀₄₎ ratio of the positive electrode material to fall within the above range, thereby effectively improving the structural stability of the positive electrode material under high temperature and high voltage, and in turn, increasing the platform capacity of the electrochemical device under high voltage, reducing the amount of gas generated by the electrochemical device during storage under high temperature and high voltage, and enhancing the high-temperature cycle performance of the electrochemical device.

In some embodiments, 0.5 ≤ FWHM₍₁₀₁₎/FWHM₍₁₀₄₎ ≤ 0.7.

In some embodiments, 0.25° ≤ FWHM₍₁₀₄₎ ≤ 0.6°. In this case, the regularity of the (104) crystal plane in the superficial layer of the positive electrode material is appropriate, thereby facilitating deintercalation of lithium ions. In some embodiments, 0.25° ≤ FWHM₍₁₀₄₎ ≤ 0.5 °.

In some embodiments, 0.15 ° ≤ FWHM₍₁₀₁₎ ≤ 0.35 °. In this case, the concentration of oxygen defects in the superficial layer of the positive electrode material is relatively high, thereby improving stability of the superficial structure of the positive electrode material and suppressing oxygen release and gassing of the material during high-temperature cycling.

In some embodiments, a full width at half maximum FWHM₍₀₀₃₎ of a (003) crystal plane diffraction peak of the positive electrode material satisfies: 0.5 ≤ FWHM₍₁₀₁₎/FWHM₍₀₀₃₎ ≤ 1.5. The (003) crystal plane represents an active plane of deintercalation of lithium ions. When the FWHM₍₁₀₁₎/FWHM₍₀₀₃₎ ratio falls within the above range, the regularity of the (003) crystal plane in the superficial layer of the positive electrode material is reduced, thereby improving the kinetics of the lithium ions deintercalation.

In some embodiments, 0.7 ≤ FWHM₍₁₀₁₎/FWHM₍₀₀₃₎ ≤ 0.9.

In some embodiments, a full width at half maximum FWHM₍₀₀₃₎ of a (003) crystal plane diffraction peak of the positive electrode material satisfies: 0.2° ≤ FWHM₍₀₀₃₎ ≤ 0.4°. When the FWHM₍₀₀₃₎ falls within the above range, the regularity of the (003) crystal plane in the superficial layer of the positive electrode material is reduced, thereby improving the kinetics of the lithium ions deintercalation.

In some embodiments, the lithium transition metal oxide includes a T element. The T element includes at least one of Ni, Co, or Mn.

In some embodiments, based on a total molar content of the T element in the lithium transition metal oxide, a molar percent of Ni element in the lithium transition metal oxide is greater than or equal to 50%. In some embodiments, based on the total molar content of the T element in the lithium transition metal oxide, the molar percent of the Ni element in the lithium transition metal oxide is less than or equal to 98 %.

In some embodiments, based on the total molar content of the T element in the lithium transition metal oxide, a molar percent of Mn element in the lithium transition metal oxide is less than or equal to 50 %.

In some embodiments, based on the total molar content of the T element in the lithium transition metal oxide, a molar percent of Co element in the lithium transition metal oxide is less than or equal to 50%.

In some embodiments, based on the total molar content of the T element in the lithium transition metal oxide, a molar percent of an F element in the lithium transition metal oxide is 0.01% to 0.5 %. By doping the positive electrode material with the F element, a specified amount of oxygen defects are introduced, and oxygen ions in the superficial layer of the material are further stabilized at the same time, thereby improving the high-temperature cycle performance of the electrochemical device.

In some embodiments, based on the total molar content of the T element in the lithium transition metal oxide, a molar percent of an N element in the lithium transition metal oxide is 0.01% to 1 %. By doping the positive electrode material with the N element, more electron defects are generated in the material, thereby further improving electronic conductivity of the material, and in turn, improving the rate performance of the material.

In some embodiments, the lithium transition metal oxide further includes Na element, optionally R element, and optionally Q element. A molar content of the Na element in the lithium transition metal oxide is n_{Na}, a molar content of the Ni element is n_{Ni}, a molar content of the Co element is n_{Co}, a molar content of the Mn element is n_{Mn}, a molar content of the R element is n_{R}, a molar content of the Q element is n_{Q}, and the total molar content of the T element is n_{T}, wherein, 0 < n_{Na}/n_{T} ≤ 0.02, 0.5 ≤ n_{Ni}/n_{T} ≤ 1, 0 ≤ n_{Co}/n_{T} ≤0.5, 0 ≤ n_{Mn}/n_{T} ≤ 0.5, 0 ≤ n_{R}/n_{T} ≤ 0.2, and 0 ≤ n_{Q}/n_{T} ≤ 0.2. The R element includes at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr. The Q element includes at least one of F, Cl, Br, or N.

This application further provides a method for manufacturing the positive electrode material described above, including the following steps: S1: mixing a precursor of the positive electrode material with a lithium source, optionally a sodium source, and optionally an R element source, and first calcinating the mixture at a first temperature by introducing a first mixed gas, so as to obtain a first product; S2: second calcinating the first product at a second temperature by introducing a second mixed gas, so as to obtain a second product; and S3: quenching the second product to a room temperature to obtain the positive electrode material. The first mixed gas includes hydrogen fluoride. The second mixed gas includes ammonia. The R element includes at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr.

In some embodiments, the first temperature is 700 °C to 900 °C, and a duration of the first calcination is 10 h to 48 h.

In some embodiments, the second temperature is 400 °C to 650 °C, and a duration of the second calcination is 4 h to 24 h.

In some embodiments, the first mixed gas further includes at least one of air, oxygen, or a mixed gas of air and oxygen.

In some embodiments, based on a total volume of the first mixed gas, a volume percent of the hydrogen fluoride is 1% to 15%.

In some embodiments, the second mixed gas further includes an inert gas. The inert gas includes at least one of nitrogen, argon, or helium.

In some embodiments, based on a total volume of the second mixed gas, a volume percent of the ammonia is 1% to 15%.

In some embodiments, the precursor of the positive electrode material includes a hydroxide of a T element. The T element includes at least one of Ni, Co, or Mn.

In some embodiments, the lithium source includes at least one of lithium carbonate or lithium hydroxide.

In some embodiments, the sodium source includes at least one of sodium carbonate, sodium bicarbonate, or sodium hydroxide.

In some embodiments, the R element source includes an oxide of the R element.

In some embodiments, a speed of the quenching is 30 °C/min to 70 °C/min.

According to a second aspect, this application provides an electrochemical device, including a positive electrode. The positive electrode includes a positive active material layer. The positive active material layer includes the positive electrode material according to the first aspect or a positive electrode material manufactured by the manufacturing method according to the first aspect.

In some embodiments, after the electrochemical device is fully discharged, the positive electrode and lithium metal are assembled to form a button battery. An initial open-circuit voltage of the button battery is Vₐ V, and the voltage of the button battery is V_{c} V after the button battery is charged at a constant current of 0.1 C until 4.6 V and then charged at a constant voltage of 4.6 V until 0.05 C, and then stands for 5 minutes, and then discharged at a constant current of 0.1 C until 2.8 V, and then stands for 5 minutes, satisfying: (V_{c} - 2.8)/Vₐ ≤ 20%. An equilibrium potential of the button battery is in a relaxed state, and a relaxation voltage differs little from 2.8 V, indicating good kinetics of the positive electrode material.

In some embodiments, when the button battery is charged and discharged at a current of 0.04 C within a voltage range of 2.8 V to 4.5 V, at least two oxidation peaks exist in a voltage range of 3.6 V to 4.5 V in an obtained differential capacity vs. voltage dQ/dV curve.

In some embodiments, when the button battery is charged and discharged at a current of 0.04 C within the voltage range of 2.8 V to 4.5 V, a first oxidation peak exists in a voltage range of 4.2 V to 4.5 V in the obtained differential capacity vs. voltage dQ/dV curve, and, based on a mass of the positive electrode material, a peak intensity of the first oxidation peak is greater than or equal to 300 mAh/g/V. This indicates that the positive electrode material achieves a relatively high charge capacity in the high-voltage range of 4.2 V to 4.5 V, thereby increasing the charge capacity of the electrochemical device.

In some embodiments, when the button battery is charged and discharged at a current of 0.04 C within the voltage range of 2.8 V to 4.5 V, a first reduction peak exists in the voltage range of 4.2 V to 4.5 V in the obtained differential capacity vs. voltage dQ/dV curve, and, based on the mass of the positive electrode material, a peak intensity of the first reduction peak is greater than or equal to 300 mAh/g/V. This indicates that the positive electrode material achieves a relatively high reversible discharge capacity in the high-voltage range of 4.2 V to 4.5 V, thereby increasing the energy density of the electrochemical device.

In some embodiments, when the button battery is charged and discharged at a current of 0.04 C within the voltage range of 2.8 V to 4.5 V, a platform exists in the voltage range of 4.2 V to 4.5 V in a discharge curve in an obtained voltage-capacity curve. This indicates that the positive electrode material achieves a reversible discharge capacity in the high-voltage range of 4.2 V to 4.5 V.

In some embodiments, when the button battery is charged and discharged at a current of 0.04 C within the voltage range of 2.8 V to 4.5 V, a capacity in the voltage range of 4.2 V to 4.5 V in the discharge curve in the obtained voltage-capacity curve is Q₁, and a capacity in a voltage range of 3.0 V to 4.5 V is Qt, wherein 0.2 ≤ Q₁/Qₜ ≤ 0.4. This indicates that the positive electrode material achieves a relatively high reversible discharge capacity in the high-voltage range of 4.2 V to 4.5 V, thereby increasing the energy density of the electrochemical device.

According to a third aspect, this application provides an electronic device. The electronic device includes the electrochemical device according to the second aspect.

By introducing oxygen defects into the superficial layer of the positive electrode material and controlling the value of the FWHM₍₁₀₁₎/FWHM₍₁₀₄₎ ratio to be less than or equal to 0.7, this application reduces activity of oxygen on the surface of the material, stabilizes oxygen ions in an outer layer of the material, and suppresses oxygen release and gassing of the material during high-temperature cycling. In addition, this activates redox properties of the transition metal, and greatly increases the energy density of the material.

### BRIEF DESCRIPTION OF DRAWINGS

FIG. 1 is XRD patterns of positive electrode material powder according to Comparative Embodiment 1 and Embodiment 9 respectively; and

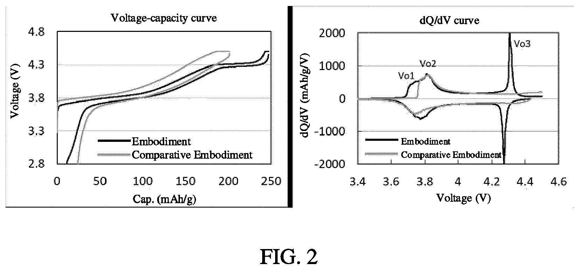

FIG. 2 shows a voltage-capacity curve and a differential capacity vs. voltage dQ/dV curve of a button battery according to Comparative Embodiment 1 and Embodiment 9.

### DETAILED DESCRIPTION OF EMBODIMENTS

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. The embodiments of this application should not be construed as a limitation on this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

A list of items referred to by the terms such as "at least one of", "at least one thereof', "at least one type of" may mean any combination of the listed items. For example, if items A and B are listed, the phrase "at least one of A and B" means: A alone; B alone; or both A and B. In another example, if items A, B, and C are listed, the phrase "at least one of A, B, and C" means: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

According to a first aspect, this application provides a positive electrode material, including a lithium transition metal oxide. As tested by X-ray diffractometry, a full width at half maximum FWHM₍₁₀₁₎ of a (101) crystal plane diffraction peak and a full width at half maximum FWHM₍₁₀₄₎ of a (104) crystal plane diffraction peak of the positive electrode material satisfy: FWHM₍₁₀₁₎/FWHM₍₁₀₄₎ ≤ 0.7. The (104) crystal plane represents a most active plane for deintercalating lithium ions, and the (101) crystal plane is usually related to a concentration of oxygen defects. Due to existence of the oxygen defects, regularity of the (104) crystal plane in a superficial layer of the positive electrode material is lower than regularity of the (101) crystal plane. In addition, with the increase of the concentration of oxygen defects, the intensity of the (101) crystal plane of the positive electrode material is increasingly higher. The regularity of the (101) crystal plane increases first and then decreases, and the regularity of the (104) crystal plane also increases first and then decreases. That is, both FWHM₍₁₀₁₎ and FWHM₍₁₀₄₎ decrease first and then increase with the increase of the concentration of the oxygen defects. The existence of oxygen defects reduces activity of oxygen on the surface of the material, stabilizes oxygen ions in an outer layer of the material, and suppresses oxygen release and gassing of the material during high-temperature cycling. In addition, the high concentration of oxygen defects activates redox properties of the transition metal, and greatly increases the energy density of the material. This application controls the FWHM₍₁₀₁₎/FWHM₍₁₀₄₎ ratio of the positive electrode material to fall within the above range, thereby effectively improving the structural stability of the positive electrode material under high temperature and high voltage, and in turn, increasing the platform capacity of the electrochemical device under high voltage, reducing the amount of gas generated by the electrochemical device during storage under high temperature and high voltage, and enhancing the high-temperature cycle performance of the electrochemical device. In an X-ray diffraction pattern, a diffraction peak of the (101) crystal plane of the positive electrode material falls within the range of 35° to 37°, and a diffraction peak of the (104) crystal plane falls within the range of 42° to 44°.

In some embodiments, the FWHM₍₁₀₁₎/FWHM₍₁₀₄₎ ratio is 0.1, 0.2, 0.3, 0.4, 0.5, 0.55, 0.6, 0.65, 0.7, or a range formed by any two thereof. In some embodiments, 0.5 ≤ FWHM₍₁₀₁₎/FWHM₍₁₀₄₎ ≤ 0.7.

In some embodiments, 0.25° ≤ FWHM₍₁₀₄₎ ≤ 0.6°. In this case, the regularity of the (104) crystal plane in the superficial layer of the positive electrode material is appropriate, thereby facilitating deintercalation of lithium ions. In some embodiments, FWHM₍₁₀₄₎ is 0.25°, 0.3°, 0.35°, 0.4°, 0.45°, 0.5°, 0.55°, 0.6°, or a range formed by any two thereof. In some embodiments, 0.25° ≤ FWHM₍₁₀₄₎ ≤ 0.5 °.

In some embodiments, 0.15 ° ≤ FWHM₍₁₀₁₎ ≤ 0.35 °. In this case, the concentration of oxygen defects in the superficial layer of the positive electrode material is relatively high, thereby improving stability of the superficial structure of the positive electrode material and suppressing oxygen release and gassing of the material during high-temperature cycling. In some embodiments, FWHM₍₁₀₁₎ is 0.15°, 0.17°, 0.2°, 0.23°, 0.25°, 0.27°, 0.3°, 0.33°, 0.35°, or a range formed by any two thereof.

In some embodiments, a full width at half maximum FWHM₍₀₀₃₎ of a (003) crystal plane diffraction peak of the positive electrode material satisfies: 0.5 ≤ FWHM₍₁₀₁₎/FWHM₍₀₀₃₎ ≤ 1.5. The (003) crystal plane represents an active plane of deintercalation of lithium ions. When the FWHM₍₁₀₁₎/FWHM₍₀₀₃₎ ratio falls within the above range, the regularity of the (003) crystal plane in the superficial layer of the positive electrode material is reduced, thereby improving the kinetics of the lithium ions deintercalation. In some embodiments, the FWHM₍₁₀₁₎/FWHM₍₀₀₃₎ ratio is 0.5, 0.6, 0.65, 0.7, 0.75, 0.8, 0.85, 0.9, 1.0, 1.1, 1.2, 1.3, 1.4, 1.5, or a range formed by any two thereof. In some embodiments, 0.7 ≤ FWHM₍₁₀₁₎/FWHM₍₀₀₃₎ ≤ 0.9.

In some embodiments, a full width at half maximum FWHM₍₀₀₃₎ of a (003) crystal plane diffraction peak of the positive electrode material satisfies: 0.2° ≤ FWHM₍₀₀₃₎ ≤ 0.4°. When the FWHM₍₀₀₃₎ falls within the above range, the regularity of the (003) crystal plane in the superficial layer of the positive electrode material is reduced, thereby improving the kinetics of the lithium ions deintercalation. In some embodiments, FWHM₍₀₀₃₎ is 0.2°, 0.25°, 0.3°, 0.35°, 0.4°, or a range formed by any two thereof.

In some embodiments, the lithium transition metal oxide includes a T element. The T element includes at least one of Ni, Co, or Mn. In some embodiments, based on a total molar content of the T element in the lithium transition metal oxide, a molar percent of Ni element in the lithium transition metal oxide is greater than or equal to 50%. In some embodiments, based on the total molar content of the T element in the lithium transition metal oxide, the molar percent of the Ni element in the lithium transition metal oxide is less than or equal to 98%, for example, is 50%, 55%, 60%, 65%, 70%, 75%, 80%, 85%, 90%, 95%, 98%, or a range formed by any two thereof.

In some embodiments, based on the total molar content of the T element in the lithium transition metal oxide, a molar percent of Mn element in the lithium transition metal oxide is less than or equal to 50%, for example, is 0.5%, 1%, 5%, 10%, 20%, 30%, 40%, 50%, or a range formed by any two thereof.

In some embodiments, based on the total molar content of the T element in the lithium transition metal oxide, a molar percent of Co element in the lithium transition metal oxide is less than or equal to 50%, for example, is 0.5%, 1%, 5%, 10%, 20%, 30%, 40%, 50%, or a range formed by any two thereof.

In some embodiments, based on the total molar content of the T element in the lithium transition metal oxide, a molar percent of an F element in the lithium transition metal oxide is 0.01% to 0.5%. By doping the positive electrode material with the F element, a specified amount of oxygen vacancies are introduced, and oxygen ions in the superficial layer of the material are further stabilized at the same time, thereby improving the high-temperature cycle performance of the electrochemical device. In some embodiments, the molar percent of fluorine is 0.01%, 0.02%, 0.03%, 0.04%, 0.05%, 0.06%, 0.07%, 0.08%, 0.09%, 0.1%, 0.15%, 0.2%, 0.25%, 0.3%, 0.35%, 0.4%, 0.45%, 0.5%, or a range formed by any two thereof.

In some embodiments, based on the total molar content of the T element in the lithium transition metal oxide, a molar percent of an N element in the lithium transition metal oxide is 0.01% to 1 %. In some embodiments, the molar percent of nitrogen is 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.8%, 1%, or a range formed by any two thereof. By doping the positive electrode material with the N element, this application causes more electron defects to be generated in the material, thereby further improving electronic conductivity of the material, and in turn, improving the rate performance of the material.

In some embodiments, the lithium transition metal oxide further includes Na element, optionally R element, and optionally Q element. A molar content of the Na element in the lithium transition metal oxide is n_{Na}, a molar content of the Ni element is n_{Ni}, a molar content of the Co element is n_{Co}, a molar content of the Mn element is n_{Mn}, a molar content of the R element is n_{R}, a molar content of the Q element is n_{Q}, and the total molar content of the T element is n_{T}, wherein, 0 < n_{Na}/n_{T} ≤ 0.02, 0.5 ≤ n_{Ni}/n_{T} ≤ 1, 0 ≤ n_{Co}/n_{T} ≤0.5, 0 ≤ n_{Mn}/n_{T} ≤ 0.5, 0 ≤ n_{R}/n_{T} ≤ 0.2, and 0 ≤ n_{Q}/n_{T} ≤ 0.2. The R element includes at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr. The Q element includes at least one of F, Cl, Br, or N.

This application further discloses a method for manufacturing the positive electrode material described above, including:
S1: mixing a precursor of the positive electrode material with a lithium source, optionally a sodium source, and optionally an R element source, and first calcinating the mixture at a first temperature by introducing a first mixed gas, so as to obtain a first product;
S2: second calcinating the first product at a second temperature by introducing a second mixed gas, so as to obtain a second product; and
S3: quenching the second product to a room temperature to obtain the positive electrode material, where the first mixed gas includes hydrogen fluoride; the second mixed gas includes ammonia; the R element includes at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr.

According to some embodiments of this application, the first temperature is 700 °C to 900 °C, for example, is 700 °C, 750 °C, 800 °C, 850 °C, or 900 °C. In some embodiments, the first mixed gas further includes at least one of air, oxygen, or a mixed gas of air and oxygen. In some embodiments, the first mixed gas includes air and hydrogen fluoride. In some embodiments, based on a total volume of the first mixed gas, a volume percent of the hydrogen fluoride is 1% to 15%, for example, is 1%, 3%, 4%, 6%, 8%, 9%, 10% %, 12%, 14%, or 15%.

According to some embodiments of this application, the second temperature is 400 °C to 650 °C, for example, is 450 °C, 500 °C, 550 °C, or 600 °C. In some embodiments, the second mixed gas further includes an inert gas. The inert gas includes at least one of nitrogen, argon, or helium. In some embodiments, the second mixed gas includes nitrogen and ammonia. In some embodiments, based on a total volume of the second mixed gas, a volume percent of the ammonia is 1% to 15%, for example, is 1%, 3%, 5%, 7%, 8%, 9%, 10%, 12%, 14%, or 15%.

According to some embodiments of this application, the precursor of the positive electrode material is a hydroxide that includes a T element. The T element includes at least one of Ni, Co, or Mn.

According to some embodiments of this application, in the precursor of the positive electrode material, a molar content of the Ni element is n_{Ni}, a molar content of the Co element is n_{Co}, a molar content of the Mn element is n_{Mn}, a molar content of the R element is n_{R}, and the total molar content of the T element is n_{T}, wherein, 0.5 ≤ n_{Ni}/n_{M} ≤ 1, 0 ≤ n_{Co}/n_{M} ≤ 0.5, 0 ≤ n_{Mn}/n_{M} ≤ 0.5, and 0 ≤ n_{R}/nₘ ≤ 0.2. The R element includes at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr.

In some embodiments, the lithium source is selected from lithium carbonate and/or lithium hydroxide. In some embodiments, the sodium source includes at least one of sodium carbonate, sodium bicarbonate, or sodium hydroxide. In some embodiments, the R element source includes an oxide of the R element.

In some embodiments, a speed of the quenching is 30 °C/min to 70 °C/min, for example, is 40 °C/min, 50 °C/min, or 60 °C/min.

According to a second aspect, this application provides an electrochemical device, including a positive electrode. The positive electrode includes a positive current collector and a positive active material layer. The positive active material layer includes the positive electrode material according to the first aspect or a positive electrode material manufactured by the manufacturing method according to the first aspect.

According to some embodiments of this application, after the electrochemical device is fully discharged, the positive electrode and lithium metal are assembled to form a button battery. An initial open-circuit voltage of the button battery is Vₐ V, and the voltage of the button battery is V_{c} V after the button battery is charged at a constant current of 0.1 C until 4.6 V and then charged at a constant voltage of 4.6 V until 0.05 C, and then stands for 5 minutes, and then discharged at a constant current of 0.1 C until 2.8 V, and then stands for 5 minutes, satisfying: (V_{c} - 2.8)/Vₐ ≤ 20%. An equilibrium potential of the button battery is in a relaxed state, and a relaxation voltage differs little from 2.8 V, indicating good kinetics of the positive electrode material.

According to some embodiments of this application, after the electrochemical device is fully discharged, the positive electrode and lithium metal are assembled to form a button battery. When the button battery is charged and discharged at a current of 0.04 C within a voltage range of 2.8 V to 4.5 V, at least two oxidation peaks exist in a voltage range of 3.6 V to 4.5 V in an obtained differential capacity vs. voltage dQ/dV curve. In this case, the positive electrode material achieves a relatively high charge capacity.

According to some embodiments of this application, after the electrochemical device is fully discharged, the positive electrode and lithium metal are assembled to form a button battery. When the button battery is charged and discharged at a current of 0.04 C within the voltage range of 2.8 V to 4.5 V, a first oxidation peak exists in a voltage range of 4.2 V to 4.5 V in the obtained differential capacity vs. voltage dQ/dV curve, and, based on a mass of the positive electrode material, a peak intensity of the first oxidation peak is greater than or equal to 300 mAh/g/V. In this case, the positive electrode material achieves a relatively high charge capacity in the high-voltage range of 4.2 V to 4.5 V, thereby increasing the charge capacity of the electrochemical device.

According to some embodiments of this application, when the button battery is charged and discharged at a current of 0.04 C within the voltage range of 2.8 V to 4.5 V, a first reduction peak exists in the voltage range of 4.2 V to 4.5 V in the obtained differential capacity vs. voltage dQ/dV curve, and, based on the mass of the positive electrode material, a peak intensity of the first reduction peak is greater than or equal to 300 mAh/g/V. In this case, the positive electrode material achieves a relatively high reversible discharge capacity in the high-voltage range of 4.2 V to 4.5 V, thereby increasing the energy density of the electrochemical device.

According to some embodiments of this application, after the electrochemical device is fully discharged, the positive electrode and lithium metal are assembled to form a button battery. When the button battery is charged and discharged at a current of 0.04 C within the voltage range of 2.8 V to 4.5 V, a platform exists in the voltage range of 4.2 V to 4.5 V in a discharge curve in an obtained voltage-capacity curve. In this case, the positive electrode material exhibits a steady discharge platform in the high-voltage range of 4.2 V to 4.5 V, thereby facilitating the electrochemical device to provide stable high-voltage discharge.

According to some embodiments of this application, after the electrochemical device is fully discharged, the positive electrode and lithium metal are assembled to form a button battery. When the button battery is charged and discharged at a current of 0.04 C within the voltage range of 2.8 V to 4.5 V, a capacity in the voltage range of 4.2 V to 4.5 V in the discharge curve in the obtained voltage-capacity curve is Q₁, and a capacity in a voltage range of 3.0 V to 4.5 V is Qt, wherein 0.2 ≤ Q₁/Qₜ ≤ 0.4. In this case, the positive electrode material achieves a relatively high reversible discharge capacity in the high-voltage range of 4.2 V to 4.5 V, thereby increasing the energy density of the electrochemical device.

According to some embodiments of this application, the positive active material layer further includes a conductive agent and a binder. In some embodiments, the binder includes, but is not limited to: polyvinyl alcohol, hydroxypropyl cellulose, diacetyl cellulose, polyvinyl chloride, carboxylated polyvinyl chloride, polyvinylpyrrolidone, polyurethane, polytetrafluoroethylene, polyvinylidene difluoride, styrene-butadiene rubber, acrylated styrene-butadiene rubber, or the like. In some embodiments, the conductive agent includes, but is not limited to, a carbon-based material, a metal-based material, a conductive polymer, or a mixture thereof. In some embodiments, the carbon-based material is selected from graphite, carbon black, acetylene black, Ketjen black, carbon nanotubes, carbon fibers, graphene, or any combination thereof. In some embodiments, the metal-based material is selected from metal powder, metal fibers, copper, nickel, aluminum, or silver. In some embodiments, the conductive polymer is a polyphenylene derivative.

According to some embodiments of this application, the positive electrode further includes a positive current collector. The positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

The electrochemical device according to this application further includes a negative electrode. The negative electrode includes a negative active material layer and a negative current collector.

According to some embodiments of this application, the negative active material layer includes a negative active material, a conductive agent, and a binder. In some embodiments, the negative active material may include a material that allows reversible intercalation and deintercalation of lithium ions, lithium metal, lithium metal alloy, or transition metal oxide. In some embodiments, the negative active material includes at least one of a carbon material or a silicon material. The carbon material includes at least one of graphite or hard carbon. The silicon material includes at least one of silicon, a silicon-oxygen compound, a silicon-carbon compound, or silicon alloy. In some embodiments, the binder may include various binder polymers. In some embodiments, the binder includes at least one of polyvinylidene fluoride, poly(vinylidene fluoride-co-hexafluoropropylene), polyamide, polyacrylonitrile, polyacrylate, polyacrylic acid, polyacrylic acid sodium salt, sodium carboxymethyl cellulose, polyvinylpyrrolidone, polyvinyl ether, polytetrafluoroethylene, polyhexafluoropropylene, or styrene-butadiene rubber. In some embodiments, the conductive agent may be made of any conductive material so long as the material does not cause a chemical change. In some embodiments, the conductive agent includes at least one of conductive carbon black, acetylene black, carbon nanotubes, Ketjen black, carbon fibers, or graphene.

According to some embodiments of this application, the negative current collector may be a copper foil, a nickel foil, a stainless steel foil, a titanium foil, foamed nickel, foamed copper, a conductive-metal-clad polymer substrate, or any combination thereof.

The electrochemical device according to this application further includes an electrolytic solution. The electrolytic solution includes a lithium salt and a nonaqueous solvent.

In some embodiments of this application, the lithium salt is at least one selected from LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, the lithium salt may be LiPF₆.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester and any combination thereof.

According to some embodiments of this application, a separator is disposed between a positive electrode and a negative electrode of the electrochemical device to prevent a short circuit. The material and the shape of the separator applicable to an embodiment of this application are not particularly limited, and may be based on any technology disclosed in the prior art. In some embodiments, the separator includes a polymer or an inorganic compound or the like formed from a material that is stable to the electrolytic solution disclosed in this application. For example, the separator may include a substrate layer and a surface treatment layer. The substrate layer is a non-woven fabric, film or composite film, each being of a porous structure. The material of the substrate layer includes at least one of polyethylene, polypropylene, polyethylene terephthalate, or polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer is disposed on at least one surface of the substrate layer. The surface treatment layer may be a polymer layer or an inorganic compound layer, or a layer formed by mixing a polymer and an inorganic compound. The inorganic substance layer includes inorganic particles and a binder. The inorganic particles include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene poly(fluoride-co-hexafluoropropylene), polyamide, polyacrylonitrile, polyacrylate, polyacrylic acid, polyacrylic acid sodium salt, polyvinylpyrrolidone, polyvinyl ether, polymethyl methacrylate, polytetrafluoroethylene, or polyhexafluoropropylene. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

According to some embodiments of this application, the electrochemical device according to this application includes, but is not limited to: a primary battery or a secondary battery of any type. In some embodiments, the electrochemical device is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery.

According to a third aspect, the electronic device according to this application may be any device that uses the electrochemical device according to the second aspect of this application.

In some embodiments, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

### Embodiments and Comparative Embodiments

1. Preparing a positive electrode material

### Comparative Embodiment 1

Step 1: A mixed solution containing NiSO₄ and MnSO₄ was prepared according to an elemental molar ratio of Ni: Mn = 50: 50, mix the mixed solution with a precipitant (NaOH solution) and a complexant (ammonia) to react, and control the reaction time is 40 hours, the concentration of ammonia is 1 mol/L, and the pH value is 12.00, so as to obtain a nickel-manganese precursor Ni_{0.5}Mn_{0.5}(OH)₂ with an average particle size Dv₅₀ of 11 µm.

Step 2: Grind and mix well the nickel-manganese precursor obtained in step 1, lithium carbonate, and sodium carbonate at a molar ratio of Li: Na: M = 1.05 : 0.01: 1 (M is an aggregate of the transition metal elements Ni and Mn), calcinated at 800 °C for 20 hours in an air atmosphere, cooled down to room temperature at a speed of 10 °C/min, and finally pulverized and sieved to obtain a positive electrode material.

### Embodiments 1 to 12

Step 1: Identical to that in Comparative Embodiment 1.

Step 2: Grind and mix well the nickel-manganese precursor obtained in step 1, lithium carbonate, and sodium carbonate at a molar ratio of Li: Na: M = 1.05 : 0.01: 1 (M is an aggregate of the transition metal elements Ni and Mn). Calcinate the mixture for 20 hours at a first temperature T1 °C (see Table 1 for details) by introducing a first mixed gas (with ingredients shown in Table 1), so as to obtain a first product. Subsequently, replace the first mixed gas with air until the temperature is cooled down to a second temperature T2 °C (see Table 1 for details) at a speed of 10 °C/min. Introduce a second mixed gas (with ingredients shown in Table 1), and stand for 6 hours under this condition, and then quench to room temperature at a speed of 50 °C/min; finally, pulverized and sieved to obtain a positive electrode material.

**Table 1**

| Embodiments and comparative embodiments | Ingredients of positive electrode material | First mixed gas | | Second mixed gas | | T1 (°C) | T2 (°C) |
|---|---|---|---|---|---|---|---|
| | | Air | HF | N₂ | NH₃ | | |
| Comparative Embodiment 1 | Li_{0.99}Na_{0.01}Ni_{0.5}Mn_{0.5}O₂ | 100 % | 0 % | - | | - | |
| Embodiment 1 | Li_{0.99}Na_{0.01}Ni_{0.5}Mn_{0.5}F_{0.0005}N_{0.001}O₂ | 99 % | 1 % | 99 % | 1 % | 800 | 600 |
| Embodiment 2 | Li_{0.99}Na_{0.01}Ni_{0.5}Mn_{0.5}F_{0.0008}N_{0.001}O₂ | 98 % | 2 % | 99 % | 1 % | 800 | 600 |
| Embodiment 3 | Li_{0.99}Na_{0.01}Ni_{0.5}Mn_{0.5}F_{0.0021}N_{0.001}O₂ | 95 % | 5 % | 99 % | 1 % | 800 | 600 |
| Embodiment 4 | Li_{0.99}Na_{0.01}Ni_{0.5}Mn_{0.5}F_{0.0029}N_{0.001}O₂ | 93 % | 7 % | 99 % | 1 % | 800 | 600 |
| Embodiment 5 | Li_{0.99}Na_{0.01}Ni_{0.5}Mn_{0.5}F_{0.0042}N_{0.001}O₂ | 90 % | 10 % | 99 % | 1 % | 800 | 600 |
| Embodiment 6 | Li_{0.99}Na_{0.01}Ni_{0.5}Mn_{0.5}F_{0.0050}N_{0.001}O₂ | 88 % | 12 % | 99 % | 1 % | 800 | 600 |
| Embodiment 7 | Li_{0.99}Na_{0.01}Ni_{0.5}Mn_{0.5}F_{0.0029}N_{0.002}o₂ | 93 % | 7 % | 98 % | 2 % | 800 | 600 |
| Embodiment 8 | Li_{0.99}Na_{0.01}Ni_{0.5}Mn_{0.5}F_{0.0029}N_{0.003}O₂ | 93 % | 7 % | 96 % | 4 % | 800 | 600 |
| Embodiment 9 | Li_{0.99}Na_{0.01}Ni_{0.5}Mn_{0.5}F_{0.0029}N_{0.005}O₂ | 93 % | 7 % | 94 % | 6 % | 800 | 600 |
| Embodiment 10 | Li_{0.99}Na_{0.01}Ni_{0.5}Mn_{0.5}F_{0.0029}N_{0.008}O₂ | 93 % | 7 % | 90 % | 10 % | 800 | 600 |
| Embodiment 11 | Li_{0.99}Na_{0.01}Ni_{0.5}Mn_{0.5}F_{0.0042}N_{0.010}O₂ | 90 % | 10 % | 88 % | 12 % | 800 | 600 |
| Embodiment 12 | Li_{0.99}Na_{0.01}Ni_{0.5}Mn_{0.5}F_{0.0042}N_{0.010}O₂ | 90 % | 10 % | 88 % | 12 % | 700 | 600 |

| | | | | | | | |
|---|---|---|---|---|---|---|---|
| Note: The percent of each ingredient in the mixed gas is a volume percent. | | | | | | | |

### 2. Preparing a lithium-ion battery

### (1) Preparing a lithium-ion button battery

Mix and stir well polyvinylidene difluoride (PVDF) as a binder, conductive carbon black (Super P) as a conductive agent, and a positive electrode material at a mass ratio of 5: 5: 95 in N-methyl-pyrrolidone (NMP) to make a positive slurry. Adjust the viscosity of the positive slurry from 3000 mPa·s to 6000 mPa·s. Coat a single side of an aluminum foil with the mixed slurry evenly for a thickness of 40 µm. Drying and rolling were performed to form a desired electrode. A humidity of the environment for processing and conveying the electrode is 45%. An areal density of the coated electrode is 14 mg/cm². Dry the electrode to obtain a positive electrode plate, and die-cut the positive electrode plate into a disc that is 14 mm in diameter.

Die-cut a separator into a disc that is 18 mm in diameter. Use a lithium metal sheet with an 18-mm diameter as a negative electrode. Add LiPF₆ into a solvent formed by mixing propylene carbonate (PC), ethylene carbonate (EC), and diethyl carbonate (DEC) at a mass ratio of 1: 1: 1, and mix the mixture well to obtain an electrolytic solution. Based on the mass of the electrolytic solution, the mass concentration of LiPF₆ is 12.5%.

Move the positive electrode plate, the separator, the negative electrode plate (lithium sheet), the electrolytic solution, a battery shell and other parts into a glovebox (with a water content less than 11 ppm). Stack the parts from bottom to top to assemble a battery, and inject the electrolytic solution. Package the battery on a packaging machine to obtain a button battery.

### (2) Preparing a lithium-ion pouch-type battery

### Preparing a positive electrode

Mix and stir well polyvinylidene difluoride (PVDF) as a binder, conductive carbon black (Super P) as a conductive agent, and a positive electrode material at a mass ratio of 2: 2: 96 in N-methyl-pyrrolidone (NMP) to make a positive slurry. Adjust the viscosity of the positive slurry to 3000 mPa·s to 6000 mPa·s. Coat both sides of an aluminum foil with the mixed slurry evenly for a thickness that is 40 µm on each side. Drying, cold-pressing, cutting and tab welding were performed to obtain a positive electrode. The humidity of the environment for processing and conveying the electrode is 45%, and the areal density of the coated electrode is 14 mg/cm².

### Preparing a negative electrode

Mix artificial graphite, styrene-butadiene rubber, and sodium carboxymethyl cellulose (CMC) at a mass ratio of 96: 2: 2, mix the mixture with deionized water, and then stir well to obtain a negative slurry. Coat a 12 µm-thick copper foil with the negative slurry. Perform drying, cold pressing, cutting, and tab welding to obtain a negative electrode.

### Preparing an electrolytic solution

Add LiPF₆ into a solvent in a dry argon atmosphere, where the solvent is formed by mixing propylene carbonate (PC), ethylene carbonate (EC), and diethyl carbonate (DEC) at a mass ratio of 1: 1: 1. Stir well to obtain an electrolytic solution. Based on the mass of the electrolytic solution, the mass concentration of LiPF₆ is 12.5%.

### Preparing a separator

Use a polyethylene (PE) porous polymer film as a separator.

### Preparing a lithium-ion battery

Stack the positive electrode, the separator, and the negative electrode sequentially, and place the separator between the positive electrode and the negative electrode to serve a function of separation. Wind the stacked structure to obtain an electrode assembly. Put the electrode assembly into an aluminum plastic film package, inject an electrolytic solution, and perform packaging. Perform steps such as chemical formation, degassing, and edge trimming to obtain a lithium-ion pouch-type battery.

### Test Methods

### 1. XRD test

Use an X-ray powder diffractometer (XRD) (model: Bruker D8 ADVANCE) to test the positive electrode material to obtain the FWHM of the diffraction peaks of the (101), (104), and (003) crystal planes, where the target material is Cu Ka, the voltage and current is 40 KV/40 mA, and the scanning angle range is 10° to 70°.

### 2. Testing the thickness expansion rate of 85 °C storage

Charge a lithium-ion pouch-type battery at a current of 0.5 C at a temperature of 25 °C until a voltage of 4.45 V, and then charge the battery at a constant voltage of 4.45 V until a current of 0.05 C. Measure the thickness of the lithium-ion battery and record the measured thickness as H₁₁. Subsequently, put the lithium-ion battery into an 85 °C oven to stand for 12 hours. At the end of the 12-hour storage, measure the thickness of the lithium-ion battery with a micrometer, and record the measured thickness as H₁₂.

Calculate the thickness expansion rate of the lithium-ion battery after 12-hour storage under 85 °C as: thickness expansion rate (%) = (H₁₂ - H₁₁)/H₁₁ × 100%.

### 3. Testing the cycling capacity retention rate of the battery under 45 °C

Put the lithium-ion pouch-type battery in a 45 °C thermostat and let it stand for 30 minutes to make the lithium-ion battery reach a constant temperature. Charge the constant-temperature lithium-ion battery at a constant current of 1.5 C at a temperature of 45 °C until a voltage of 4.35 V. Subsequently, charging the battery at a constant voltage of 4.35 V until a current of 0.02 C. Let the battery stand for 5 minutes, and then discharge the battery at a constant current of 4 C until a voltage of 2.8 V. Let the battery stand for 5 minutes. Test the discharge capacity and record it as a first-cycle discharge capacity. Repeat the foregoing charge-and-discharge steps for 300 cycles, measure the discharge capacity of the battery at the end of the 300^{th} cycle, and record it as a 300^{th}-cycle discharge capacity.

Capacity retention rate of the lithium-ion battery after 300 cycles under 45 °C (%) = 300^{th}-cycle discharge capacity/first-cycle discharge capacity × 100 %.

### 4. Testing the temperature increment of the battery charged at 1.5 C/discharged at 8 C

Put the lithium-ion pouch-type battery into a 25 °C thermostat, and let the battery stand for 30 minutes to make the lithium-ion battery reach a constant temperature. Charge the constant-temperature lithium-ion battery at a constant current of 1.5 C until the voltage reaches 4.35 V, and then charge the battery at a constant voltage of 4.35 V until the current reaches 0.05 C. Subsequently, discharge the battery at a constant current of 8 C until a voltage of 2.7 V. In this process, wrap the lithium-ion battery with heat insulation foam, measure the temperature of the lithium-ion battery at the head, tail, and middle part of the battery by using a multi-channel thermometer, and average out the measured values.

### 5. Testing the gram capacity

Charge the lithium-ion button battery at a constant current of 0.5 C (that is, a current at which the nominal capacity of the battery is fully discharged within 2 hours) in a 25 °C environment until the voltage reaches an upper limit 4.5 V, and record the first-cycle charge capacity of the lithium-ion button battery. Subsequently, discharge the battery at a current of 0.2 C until the voltage finally reaches 2.8 V, and record the first-cycle discharge capacity of the lithium-ion button battery.

A ratio of the first-cycle charge capacity of the lithium-ion button battery to the mass of the positive electrode material is recorded as a charging gram capacity of the positive electrode material.

A ratio of the first-cycle discharge capacity of the lithium-ion button battery to the mass of the positive electrode material is recorded as a gram capacity of the positive electrode material cycled at 0.2 C under 25 °C.

### 6. Testing a kickback voltage

An initial open-circuit voltage of the lithium-ion button battery is Vₐ V, and the voltage of the button battery is V_{c} V after the lithium-ion button battery is charged at a constant current of 0.1 C in a 25 °C environment until 4.6 V and then charged at a constant voltage of 4.6 V until 0.05 C, and then stands for 5 minutes, and then discharged at a constant current of 0.1 C until 2.8 V, and then stands for 5 minutes. Kickback voltage percent after the discharge = (V_{c} - 2.8)/Vₐ×100%.

### 7. Testing the Q₁/Qₜ ratio

Obtain a discharge curve of the lithium-ion button battery at a 0.04 C rate within a voltage range of 2.8 V to 4.5 V by testing the battery with an electrochemical workstation. Calculate a capacity in the voltage range of 4.2 V to 4.5 V in the discharge curve to be Q₁, and a capacity in the voltage range of 3.0 V to 4.5 V to be Qt.

The test results as shown below.

**Table 2-1**

| | FWHM₍₁₀₁₎ | FWHM₍₁₀₄₎ | FWHM₍₀₀₃₎ | FWHM₍₁₀₁₎/ FWHM₍₁₀₄₎ | FWHM₍₁₀₁₎/F WHM₍₀₀₃₎ |
|---|---|---|---|---|---|
| Comparative Embodiment 1 | 0.364 | 0.36 | 0.04 | 1.01 | 9.1 |
| Embodiment 1 | 0.18 | 0.26 | 0.2 | 0.69 | 0.9 |
| Embodiment 2 | 0.2 | 0.3 | 0.23 | 0.67 | 0.87 |
| Embodiment 3 | 0.22 | 0.37 | 0.28 | 0.59 | 0.79 |
| Embodiment 4 | 0.26 | 0.49 | 0.35 | 0.53 | 0.74 |
| Embodiment 5 | 0.25 | 0.46 | 0.34 | 0.54 | 0.74 |
| Embodiment 6 | 0.24 | 0.42 | 0.31 | 0.57 | 0.77 |
| Embodiment 7 | 0.26 | 0.49 | 0.35 | 0.53 | 0.74 |
| Embodiment 8 | 0.26 | 0.49 | 0.35 | 0.53 | 0.74 |
| Embodiment 9 | 0.26 | 0.49 | 0.35 | 0.53 | 0.74 |
| Embodiment 10 | 0.26 | 0.49 | 0.35 | 0.53 | 0.74 |
| Embodiment 11 | 0.26 | 0.49 | 0.35 | 0.53 | 0.74 |
| Embodiment 12 | 0.34 | 0.49 | 0.4 | 0.69 | 0.85 |

**Table 2-2**

| | Q₁/Qₜ | (V_{c}-2.8)/Vₐ | Thickness expansion rate of 85 °C storage | 45 °C cycling capacity retention rate | Temperature increment of battery charged at 1.5 C/discharged at 8 C (°C) | Charge capacity per gram (mAh/g) | Gram capacity at 0.2 C under 25 °C (mAh/g) |
|---|---|---|---|---|---|---|---|
| Comparative Embodiment 1 | 0.12 | 0.3 | 40 % | 70 % | 41 | 190 | 165.87 |
| Embodiment 1 | 0.24 | 0.19 | 18 % | 80 % | 35 | 218 | 192.28 |
| Embodiment 2 | 0.26 | 0.19 | 18 % | 81 % | 35 | 220 | 194.04 |
| Embodiment 3 | 0.3 | 0.19 | 10 % | 82 % | 35 | 223 | 196.69 |
| Embodiment 4 | 0.33 | 0.19 | 6 % | 83 % | 35 | 225 | 198.45 |
| Embodiment 5 | 0.33 | 0.19 | 6 % | 84 % | 35 | 225 | 198.45 |
| Embodiment 6 | 0.31 | 0.19 | 7 % | 84 % | 35 | 224 | 197.57 |
| Embodiment 7 | 0.33 | 0.16 | 6 % | 83 % | 33 | 225 | 198.86 |
| Embodiment 8 | 0.33 | 0.13 | 6 % | 86 % | 30 | 225 | 199.06 |
| Embodiment 9 | 0.33 | 0.1 | 6 % | 85 % | 28 | 225 | 200.48 |
| Embodiment 10 | 0.33 | 0.11 | 6 % | 83 % | 29 | 225 | 199.46 |
| Embodiment 11 | 0.33 | 0.13 | 6 % | 83 % | 30 | 225 | 199.06 |
| Embodiment 12 | 0.24 | 0.17 | 9 % | 81 % | 33 | 220 | 194.63 |

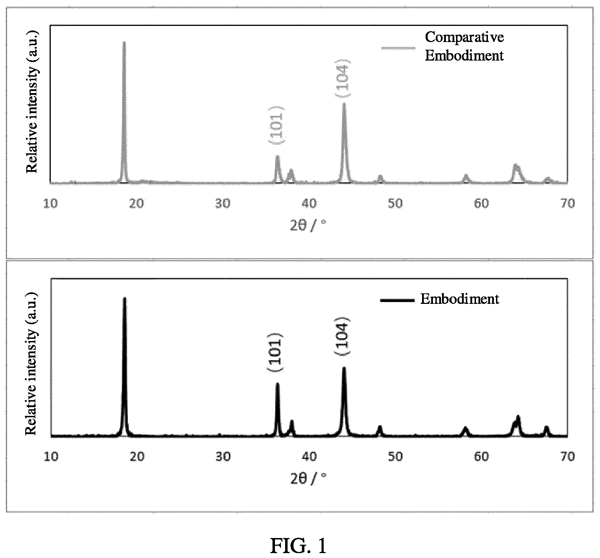

As can be seen from comparison between Embodiments 1 to 6 and Comparative Embodiment 1, with the change of gas ingredients, the concentration of oxygen defects inside the positive electrode material is increasingly higher. Due to existence of the oxygen defects, the regularity of the (104) crystal plane in the superficial layer of the positive electrode material is lower than the regularity of the (101) crystal plane. The existence of the oxygen defects can reduce the activity of oxygen on the surface of the material, stabilize the oxygen ions in the outer layer of the material, and suppress oxygen release and gassing during high-temperature cycling of the material. With the increase of the concentration of oxygen defects, the FWHM of the (104) crystal plane is increasingly larger. The corresponding FWHM₍₁₀₁₎/FWHM₍₁₀₄₎ ratio decreases gradually. The high concentration of oxygen defects can activate redox properties of the transition metal, and reduce the redox valence of the transition metal in the material. Therefore, the platform capacity generated in the high-voltage range is higher, and the Q₁/Qₜ ratio is higher. In addition, as shown in FIG. 1, with the increase of the concentration of the oxygen defects, the intensity of the (101) crystal plane of the positive electrode material is increasingly higher.

As can be seen from Embodiment 7 to Embodiment 11, due to the further increase of the doping percent of the N element, more electronic defects are generated in the material. This further improves the electronic conductivity of the material, thereby improving the rate performance of the material. In this way, the temperature increment of the lithium-ion battery discharged at a high rate is reduced, and the kickback voltage at the end of the discharge is lower.

Although some exemplary embodiments of this application have been illustrated and described, this application is not limited to the disclosed embodiments. Rather, a person of ordinary skill in the art is aware that modifications and changes may be made to the described embodiments without departing from the spirit and scope of this application set forth in the claims appended hereto.

## Claims

1. A positive electrode material, comprising a lithium transition metal oxide, wherein, as tested by X-ray diffractometry, a full width at half maximum FWHM₍₁₀₁₎ of a (101) crystal plane diffraction peak and a full width at half maximum FWHM₍₁₀₄₎ of a (104) crystal plane diffraction peak of the positive electrode material satisfy: FWHM₍₁₀₁₎/FWHM₍₁₀₄₎ ≤ 0.7.

2. The positive electrode material according to claim 1, wherein 0.5 ≤ FWHM₍₁₀₁₎/FWHM₍₁₀₄₎ ≤ 0.7.

3. The positive electrode material according to claim 1, wherein 0.15° ≤ FWHM₍₁₀₁₎ ≤ 0.35° and/or 0.25° ≤ FWHM₍₁₀₄₎ ≤ 0.6°.

4. The positive electrode material according to claim 1, wherein a full width at half maximum FWHM₍₀₀₃₎ of a (003) crystal plane diffraction peak of the positive electrode material satisfies: 0.5 ≤ FWHM₍₁₀₁₎/FWHM₍₀₀₃₎ ≤ 1.5.

5. The positive electrode material according to claim 1, wherein the positive electrode material satisfies at least one of the following conditions (i) to (ii):
(i) 0.7 ≤ FWHM₍₁₀₁₎/FWHM₍₀₀₃₎ ≤ 0.9; or
(ii) a full width at half maximum FWHM₍₀₀₃₎ of a (003) crystal plane diffraction peak of the positive electrode material satisfies: 0.2° ≤ FWHM₍₀₀₃₎ ≤ 0.4°.

6. The positive electrode material according to claim 1, wherein the lithium transition metal oxide comprises a T element, the T element comprises at least one of Ni, Co, or Mn, and the positive electrode material satisfies at least one of the following conditions (a) to (d):
(a) based on a total molar content of the T element in the lithium transition metal oxide, a molar percent of Ni element in the lithium transition metal oxide is greater than or equal to 50%;
(b) based on the total molar content of the T element in the lithium transition metal oxide, a molar percent of Mn element in the lithium transition metal oxide is less than or equal to 50%; and/or, based on the total molar content of the T element in the lithium transition metal oxide, a molar percent of Co element in the lithium transition metal oxide is less than or equal to 50%;
(c) based on the total molar content of the T element in the lithium transition metal oxide, a molar percent of an F element in the lithium transition metal oxide is 0.01% to 0.5%;
(d) based on the total molar content of the T element in the lithium transition metal oxide, a molar percent of an N element in the lithium transition metal oxide is 0.01% to 1%;
(e) the lithium transition metal oxide further comprises Na element, optionally R element, and optionally Q element; a molar content of the Na element in the lithium transition metal oxide is n_{Na}, a molar content of the Ni element is n_{Ni}, a molar content of the Co element is n_{Co}, a molar content of the Mn element is n_{Mn}, a molar content of the R element is n_{R}, a molar content of the Q element is n_{Q}, and the total molar content of the T element is n_{T}, wherein 0 < n_{Na}/n_{T} ≤ 0.02, 0.5 ≤ n_{Ni}/n_{T} ≤ 1, 0 ≤ n_{Co}/n_{T} ≤0.5, 0 ≤ n_{Mn}/n_{T} ≤ 0.5, 0 ≤ n_{R}/n_{T} ≤ 0.2, and 0 ≤ n_{Q}/n_{T} ≤ 0.2; the R element comprises at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr; and the Q element comprises at least one of F, Cl, Br, or N.

7. A method for manufacturing a positive electrode material, comprising:
S1: mixing a precursor of the positive electrode material with a lithium source, optionally a sodium source, and optionally an R element source, and first calcinating the mixture at a first temperature by introducing a first mixed gas, so as to obtain a first product;
S2: second calcinating the first product at a second temperature by introducing a second mixed gas, so as to obtain a second product; and
S3: quenching the second product to a room temperature to obtain the positive electrode material, wherein
the first mixed gas comprises hydrogen fluoride; the second mixed gas comprises ammonia; the R element comprises at least one of Mg, Al, Ti, Zr, Nb, Y, Cr, V, Ge, Mo, Fe, Cu, Zn, Ga, Ag, W, In, Sn, Pb, Sb, La, Ce, Ca, Ba, or Sr.

8. The method for manufacturing a positive electrode material according to claim 7, wherein the manufacturing method satisfies at least one of the following conditions (1) to (11):
(1) the first temperature is 700 °C to 900 °C, and a duration of the first calcination is 10 h to 48 h;
(2) the second temperature is 400 °C to 650 °C, and a duration of the second calcination is 4 h to 24 h;
(3) the first mixed gas further comprises at least one of air, oxygen, or a mixed gas of air and oxygen;
(4) based on a total volume of the first mixed gas, a volume percent of the hydrogen fluoride is 1% to 15%;
(5) the second mixed gas further comprises an inert gas, and the inert gas comprises at least one of nitrogen, argon, or helium;
(6) based on a total volume of the second mixed gas, a volume percent of the ammonia is 1% to 15%;
(7) the precursor of the positive electrode material comprises a hydroxide of a T element, and the T element comprises at least one of Ni, Co, or Mn;
(8) the lithium source comprises at least one of lithium carbonate or lithium hydroxide;
(9) the sodium source comprises at least one of sodium carbonate, sodium bicarbonate, or sodium hydroxide;
(10) the R element source comprises an oxide of the R element; or
(11) a speed of the quenching is 30 °C/min to 70 °C/min.

9. An electrochemical device, comprising a positive electrode, wherein the positive electrode comprises a positive current collector and a positive active material layer, and the positive active material layer comprises the positive electrode material according to any one of claims 1 to 6 or the positive electrode material manufactured according to any one of claims 7 to 8.

10. The electrochemical device according to claim 9, wherein, after the electrochemical device is fully discharged, the positive electrode and lithium metal are assembled to form a button battery, and the button battery satisfies at least one of the following conditions (f) to (k):
(f) an initial open-circuit voltage of the button battery is Vₐ V, and the voltage of the button battery is V_{c} V after the button battery is charged at a constant current of 0.1 C until 4.6 V and then charged at a constant voltage of 4.6 V until 0.05 C, and then stands for 5 minutes, and then discharged at a constant current of 0.1 C until 2.8 V, and then stands for 5 minutes, satisfying: (V_{c} - 2.8)/Vₐ ≤ 20%;
(g) when the button battery is charged and discharged at a current of 0.04 C within a voltage range of 2.8 V to 4.5 V, at least two oxidation peaks exist in a voltage range of 3.6 V to 4.5 V in an obtained differential capacity vs. voltage dQ/dV curve ;
(h) when the button battery is charged and discharged at a current of 0.04 C within the voltage range of 2.8 V to 4.5 V, a first oxidation peak exists in a voltage range of 4.2 V to 4.5 V in the obtained differential capacity vs. voltage dQ/dV curve, and, based on a mass of the positive electrode material, a peak intensity of the first oxidation peak is greater than or equal to 300 mAh/g/V;
(i) when the button battery is charged and discharged at a current of 0.04 C within the voltage range of 2.8 V to 4.5 V, a first reduction peak exists in the voltage range of 4.2 V to 4.5 V in the obtained differential capacity vs. voltage dQ/dV curve, and, based on the mass of the positive electrode material, a peak intensity of the first reduction peak is greater than or equal to 300 mAh/g/V;
(g) when the button battery is charged and discharged at a current of 0.04 C within the voltage range of 2.8 V to 4.5 V, a platform exists in the voltage range of 4.2 V to 4.5 V in a discharge curve in an obtained voltage-capacity curve; or
(k) when the button battery is charged and discharged at a current of 0.04 C within the voltage range of 2.8 V to 4.5 V, a capacity in the voltage range of 4.2 V to 4.5 V in the discharge curve in the obtained voltage-capacity curve is Q₁, and a capacity in a voltage range of 3.0 V to 4.5 V is Qt, wherein 0.2 ≤ Q₁/Qₜ ≤ 0.4.

11. An electronic device, comprising the electrochemical device according to claim 9 or 10.
